# EUROPEAN PATENT APPLICATION

(11) **EP 2 034 389 A1**
(43) Date of publication of application: **11.03.2009**
(21) Application number: 07115882.8
(22) Date of filing: 07.09.2007
(51) Int. Cl.: G06F 3/01

(54) **Method and system for linking appliances**

(71) Applicant: Nederlandse Organisatie voor Toegepast- Natuurwetenschappelijk Onderzoek TNO, 2628 VK Delft (NL)
(72) Inventor: Beute, Berco, 9727 DS Groningen (NL)
(74) Representative: Hatzmann, Martin

(57) **Abstract**

Method and system for linking at least two appliances (1) connectable by a communication medium (2,6), by subjecting each appliance to an identification movement (4). The identification movement of each appliance is converted into a corresponding identification signal. Those identification signals are transferred and processed by identification processing means (5). For linking the appliances, the appliances are held together (3) and any random movement (4) is performed. The identification signals of both appliances are transferred to the identification processing means in which it is concluded whether or not the received identification signals correspond to the same movement.

## Description

The invention relates to a method and system for linking at least two appliances by moving said appliances.

WO2006127270 discloses an information exchange system (IES) and method allowing users of portable appliances such as mobile telephone devices to initiate exchanges of information with a simple gesture, used as a motion signature. Detection of such gesture may cause an initiating appliance to perform a number of actions, e.g. selecting data for an exchange transaction, identifying one or more destination appliances to receive the selected data, transferring the selected data to the destination appliances, and receiving complementary or corresponding data from the destination appliances. The system thus avoids the requirement for users to perform time consuming and error prone interactions involving complex operations with an appliance interface in order to initiate data exchanges. This prior art IES includes a database in which motion signatures are stored in advance. The IES compares information of the detected motion with information of the stored motion patterns and identifies motion patterns that match or correspond to the detected motion.

For some applications a drawback of the prior art system may be that the gestures, used as motion signatures, i.e. in (digital) signal or code form, have to be learned and stored in advance in a database. Contrary to that, in a system according to the present invention, any gesture can be used, without using any database for saving gestures in signal or code form. One aspect of the invention is to provide a simple, intuitive form for linking two or more appliances, e.g. in order to exchange information.

The present invention provides a method for linking at least two appliances connectable by a communication medium, by subjecting each appliance to an identification movement, the identification movement of each appliance being converted into a corresponding identification signal, the relevant appliance identification signals being transferred to and processed by identification processing means, the method comprising the steps of:
- holding the appliances together;
- performing any movement with those appliances held together, and transferring the identification signals of the appliances to the identification processing means;
- checking, in the identification processing means, whether or not the received identification signals correspond to the same common movement. Preferably, the common movement is a random movement.

In this way, all kinds of information can be exchanged between e.g. two appliances. A transmission channel through a communication medium between both appliances may be opened after performing the linking process according to the invention: both appliances are brought physically together, e.g. taken into one hand of a user after which the user makes any random gesture(s) with both appliances in his/her hands. In both appliances the gestures are converted into signals (or codes) which are compared with each other. If the processing means concludes that both appliances made the same motion, the processing means may achieve that e.g. a data connection between both appliances is set up via the transmission network.

The invention also provides a software program product for carrying out the method defined above. The software program product may comprise instructions which can be carried out be a computer so as to perform the method steps, and may comprise a suitable carrier, such as a CD or DVD, or be stored on a (remote) server. The software program product may be downloadable via a suitable network, for example the Internet.

The invention further provides a system for linking at least two appliances connectable by a communication medium, by subjecting each appliance to an identification movement, each appliance comprising means for converting the identification movement into a corresponding identification signal and transferring it to identification processing means, wherein the identification processing means are arranged to check whether or not the identification signals received correspond to the same movement performed with the appliances.

Preferably, each appliance comprises means for defining a time window of, after holding the appliances together, performing any movement with those appliances held together, and transferring to the identification processing means, an indication of the time window of said movement as well as the identification signals of the appliances resulting from that movement. The processing means may reside in an identification server and/or in either appliance.

The invention additionally provides an identification server for use in the method and/or system defined above, and an appliance for use in the method and/or system defined above. The appliance(s) may comprise a mobile telephone device, a PDA (Personal Digital Assistant), a notebook computer, or a similar device.

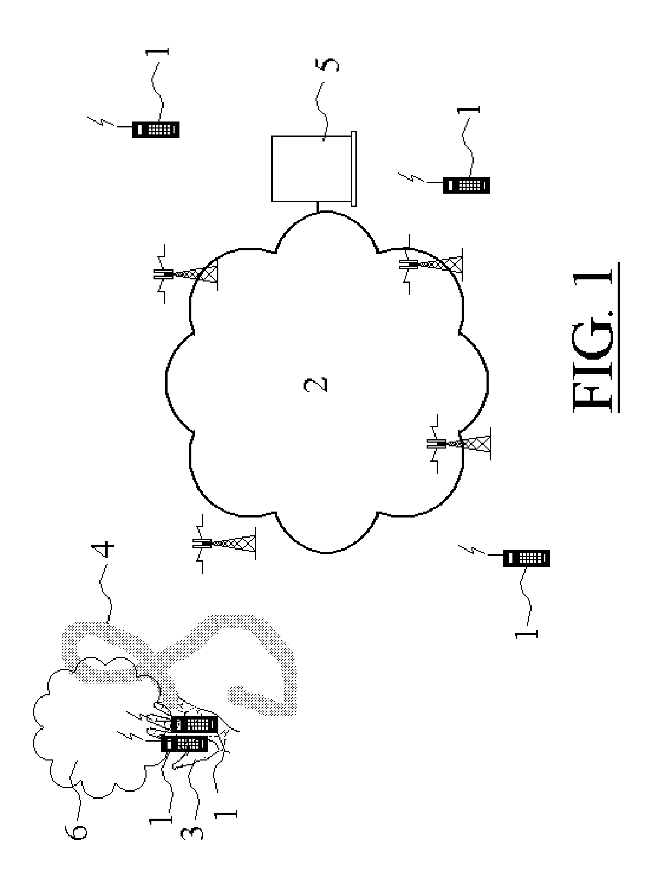

Hereinafter a system for performing the method according to the invention will discussed with reference to figure 1.

Figure 1 shows schematically a communication or data system, including appliances 1 (e.g. mobile terminals) which can be interconnected by a communication medium 2 by subjecting each appliance 1 to an identification movement 4. Each appliance comprises means (not shown) for converting the identification movement 4 into a corresponding identification signal and transferring it to identification processing means, formed by an identification server 5, which is arranged to check whether or not the identification signals received from appliances 1 correspond to the same movement performed with the appliances.

Figure 1 suggests that two appliances 1 are taken together, e.g. in one hand 3 of a user, after which the user performs a random movement with his/her hand, including those appliances 1 taken together. Each appliance 1 may comprise means, e.g. a press button, for defining a time window, comprising a start and stop timestamp of the common movement with those appliances held together, and transferring via the communication medium to the identification processing server 5, an indication of the time window in which the common movement was performed, together with the identification signals of both appliances 1 resulting from that (common) movement. Each complete identification signal thus could have the format of:
<starting timestamp>;<movement parameters>;<stop timestamp>.

The movement parameters may be originated by 3D acceleration sensors or 3D optical sensors in each appliance, capable to convert (appliance) motions into corresponding (identification) signals.

Figure 1 shows that the identification processing means may reside in an identification server 5. However, such processing means may, alternatively or additionally, reside in either appliance, e.g. when the identification signals are not transferred via the (public) mobile network 2, but e.g. via a local, short distance communication medium 6, like Bluetooth^{®} etc. In that case either appliance or both appliances can compare, by the identification processing means integrated in either appliance, both identification signals originated by the (common) movement of both appliances 1.

## Claims

1. Method for linking at least two appliances (1) connectable by a communication medium (2,6), by subjecting each appliance to an identification movement (4), the identification movement of each appliance being converted into a corresponding identification signal, the relevant appliance identification signals being transferred to and processed by identification processing means (5),
the method comprising the steps of:
- holding the appliances together (3);
- performing any movement (4) with those appliances held together, and transferring the identification signals of the appliances to the identification processing means; and
- comparing, in the identification processing means, whether or not the received identification signals correspond to the same common movement.

2. Method according to claim 1, wherein the movement is a random movement (4).

3. Software program product for carrying out the method according to claim 1 or 2.

4. System for linking at least two appliances (1) connectable by a communication medium (2), by subjecting each appliance to an identification movement (4), each appliance comprising means for converting the identification movement into a corresponding identification signal and transferring it to identification processing means (5),
wherein the identification processing means are arranged to check whether or not the identification signals received correspond to the same movement performed with the appliances.

5. System according to claim 4, wherein each appliance comprises means for defining a time window of, after holding the appliances together, performing any movement with those appliances held together, and transferring to the identification processing means an indication of the time window of said movement as well as the identification signals of the appliances resulting from that movement.

6. System according to claim 4 or 5, wherein the processing means reside in an identification server.

7. System according to claim 4, 5 or 6, wherein the processing means reside in either appliance.

8. Identification server for use in the method according to any of claims 1-2 and/or in the system according to any of claims 4-7.

9. Appliance for use in the method according to any of claims 1-2 and/or in the system according to any of claims 4-7.

10. Appliance according to claim 9, which is a mobile telephone device or a PDA.
